(19)

**Europäisches Patentamt**
**European Patent Office**
**Office européen des brevets**

(11) **EP 4 600 689 A1**

(12) # EUROPEAN PATENT APPLICATION

(43) Date of publication:
**13.08.2025 Bulletin 2025/33**

(21) Application number: **25152657.0**

(22) Date of filing: **17.01.2025**

(51) International Patent Classification (IPC):
*G01S 7/295* (2006.01)    *E01D 22/00* (2006.01)
*G01B 15/06* (2006.01)    *G01S 13/90* (2006.01)

(52) Cooperative Patent Classification (CPC):
**G01S 13/9023; E01D 22/00; G01S 7/295**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.02.2024 IT 202400002389**

(71) Applicant: **Politecnico di Bari**
**70126 Bari (IT)**

(72) Inventors:
• **Calò, Mirko**
**BARI (IT)**

• **Nettis, Andrea**
**BARI (IT)**
• **Ruggieri, Sergio**
**BARI (IT)**
• **Uva, Giuseppina**
**Bari (IT)**

(74) Representative: **Perronace, Andrea et al**
**Jacobacci & Partners S.p.A.**
**Via Tomacelli, 146**
**00186 Roma (IT)**

Remarks:
Claims filed after the date of filing of the application (Rule 68(4) EPC).

(54) **MTINSAR DATA-BASED EARLY WARNING SYSTEM FOR PREDICTING STRUCTURAL BEHAVIOR OF EXISTING BRIDGES**

(57)    The present invention relates to a satellite monitoring method for detecting structural anomalies of a bridge by means of permanent scatterers of a first ($I_A$) and a second ($I_D$) satellite radar images time series, corresponding to opposite ascending and descending satellite orbital geometries along an axis of a satellite reference system.

The method comprises a step A of selecting a common subset of permanent scatterers ($PS_P$), a step B of temporal alignment of the time series, a step C of linear interpolation of the time series, a step D of defining a local mobile reference system M-LCRS of the bridge, a step E of projecting the time series in an END reference system, a step F of projecting the time series in the M-LCRS system, a step G of spatial averaging among the permanent scatterers of the common subset of the time series, a step H of processing according to a trendseasonal decomposition STL-LOESS method, and a step I of comparing with predefined thresholds for detecting structural anomalies.

Fig. 1

EP 4 600 689 A1

**Description**

The present invention relates to the technical field of risk management and safety assessments for existing bridges and viaducts.

More precisely, the present invention relates to an MTInSAR data-based early warning method for predicting structural behavior of existing bridges.

## Background art

Recent events related to the collapse of bridges and viaducts have rekindled the debate on the structural safety of existing estate, not only concerning natural risks such as earthquakes and landslides, but especially concerning the lack of attention by management bodies and the need for prevention-oriented maintenance. It is obvious to everyone that works such as bridges and viaducts are subject, during the operating life thereof, to exogenous actions which cause degradation thereof, such as environmental conditions that can cause corrosion phenomena or a malfunction of the supports.

In order to regulate maintenance and control operations of bridges and viaducts, the Italian Ministry of Infrastructure and Transport published in 2020 the new Guidelines for the classification and management of risk and the safety assessment and monitoring of existing bridges. They provide a multilevel approach to carry out a complete screening of existing bridges, assessing the risk thereof on a large scale and prioritizing extraordinary maintenance interventions on works most at risk, as well as on those with greater structural, seismic, hydrological and geological vulnerabilities. The approach suggested by the Italian guidelines, as provided by other international procedures, requires detailed on-field investigations with in-depth inspections of each work, in order to carry out such assessments. If works exhibit high risk indicators, the management body is required to carry out an accurate assessment of such infrastructures, by means of survey campaigns so as to achieve in-depth knowledge and structural monitoring with specialized sensors. It is thus easy to think that inspection and assessment operations are highly expensive, both in terms of time and costs, and this involves a great waste of resources by the management bodies which must assess a large amount of existing works distributed across the road and railway networks. In addition, it is apparent that structural monitoring and accurate exploration campaigns are difficult to implement on all high-risk bridges, especially when considering that out of an estimated estate of 1.5 million bridges, about 18,000 require adaptation interventions.

It is thus necessary to develop and use new control and monitoring means which are cost-effective, i.e., which can utilize the so-called "poor data" so as to pursue the noble goal of prevention and guide the management bodies towards correct maintenance, thus preventing those well-known tragic events which have hit the headlines.

It is thus necessary to start from the premise of improving current control and maintenance practices for existing bridges and viaducts. In fact, with the entry into force of the new guidelines on safety assessment of existing bridges released by the Ministry of Infrastructure and Transport, new infrastructure monitoring means of the cost-effective type are increasingly necessary, in order to pursue the objectives of risk prevention and prioritization of interventions on a vast portfolio of existing bridges and viaducts. New technologies and digital innovation can be the means used to improve the processes imposed in the guidelines. It is thus necessary to utilize such concepts to suggest solutions mainly in the market of the infrastructure estate management bodies, starting from the most famous Anas S.p.A. and Autostrade per l'Italia, for road networks consisting of state roads and motorways, up to the provinces and metropolitan areas, which are responsible for some of the works in highly urbanized areas. The suggested method provides a new and effective means to reduce the workload of these state and parastatal bodies, and to inform those responsible of possible malfunctions or risks in such structures, so as to promptly intervene (e.g., closures or traffic limitations).

To this, it is necessary to add further commercial development that such a procedure can have, namely that in the aerospace industry. In particular, more and more businesses are setting up their core business by utilizing satellite data and the relevant information content for various applications. Such companies, which usually provide services for observing and monitoring areas or structures in real-time, buy satellite data (already processed) and sell them to the customers thereof in the form of monitoring services. Finally, it should not be forgotten that a solution to the issue described above using satellite data is introduced in the satellite data processing market, where many businesses are working to develop image processing algorithms, so as to provide time series (e.g., MTInSAR algorithms) or simple differential processing (e.g., DInSAR algorithms).

Technological evolution in the aerospace industry will lead, in the coming years, to the availability of new constellations of technologically advanced satellites (e.g., IRIDE constellation). This factor will likely lead to incremental availability of high-resolution SAR data at increasingly affordable prices. In addition, the spread of interferometry algorithms available in the Geographic Information System environment will make the use of such a technique increasingly familiar to operators in the engineering field. It should also be added that currently, to carry out reliable monitoring of a bridge or viaduct, it is necessary to use conventional methods, such as those based on the installation of sensors (e.g., accelerometers) which allow detecting, downstream of long and complex post-processing operations, any unforeseen ongoing phenomena.

As far as the inventors are aware, there are no references that suggest an early warning system based on satellite data.

Furthermore, scientific literature in this field does not highlight the use of satellite data as a method for predicting the structural behavior of bridges and viaducts, but only a verification of previous situations and events (e.g., collapses of bridges which occurred due to landslides or subsidence).

In addition, very few applications provide quantitative limits on the observed displacements on infrastructures, but no work links such limits to the operating conditions and to the type of event currently occurring on the works being monitored.

In addition, no early warning methods exist, which are oriented to the prediction of the behavior in operation of reinforced concrete bridges with simply supported structural scheme.

A potential option based on the development of innovative technologies is that aiming to utilize the information content of satellite data, which generally consists of displacements and speeds of physical elements materialized on the surface of the Earth or on bodies positioned thereon (e.g., buildings and bridges). In particular, by utilizing interferometry on Synthetic Aperture Radar (SAR) data it is possible to monitor particular low-speed deformations, not appreciable through a mere on-site observation. Such slow movements can occur due to various factors, such as slow kinematic movements occurring in the surrounding area of the bridges, anomalous temperature variations, failures or deformations of components induced by degradation, for example, which can currently be monitored by means of specific sensors only.

The operating principles underlying satellite data are now known from scientific literature and aim to utilize the rotation of satellites around the Earth along quasi-polar orbits (generally oriented in a North-South direction). Such a movement allows the same scene to be revisited at the same local solar time, according to two different acquisition geometries, i.e., an ascending one and a descending one. SAR systems use a transmitting antenna which illuminates the scene on the ground with an electromagnetic wave along the line of sight (LoS) of the satellite. This wave is partly absorbed and partly reflected by the scene on the ground. The reflected portion is intercepted by the antenna itself, which is also equipped to receive the signals. The signal is materialized in an image consisting of cells that represent portions of the surface of the Earth and to which an amplitude and phase value of the reflected signal is attributed. Depending on the type of satellite, the acquisitions can be characterized by different spatial and/or temporal resolutions. From the point of view of spatial resolution, the fundamental parameter is the wavelength, where the electromagnetic waves with shorter wavelengths achieve a better spatial resolution. High resolution images are those having a wavelength in the X-band, i.e., from 7 to 12.5 GHz. From the point of view of temporal resolution, this varies depending on the number of satellites which actively form the constellation. The result is a quasi-continuous monitoring in which the time between consecutive observations can be relatively short but is not continuous like in real-time sensor monitoring. The amplitude and phase parameters of the image are then used in interferometry (InSAR) algorithms, where they are processed. In particular, based on the phase parameter, Multi-Temporal InSAR (MTInSAR, Multi-Temporal Interferometric Synthetic Aperture Radar) algorithms allow calculating time series of displacements of portions of the surface of the Earth represented by points. The latter, referred to as permanent scatterers (PS), generally refers to parts of buildings or structures and can be used to monitor the behavior of a specific structure.

The 2023 paper ([1]) to Mirko Calò et al. analyzes the application of Interferometric Synthetic Aperture Radar (InSAR) to monitor structural deformations by means of time series of displacements of Permanent Scatterers (PS) on the surface of the Earth. The study compares the Sentinel-1 and COSMO-SkyMed satellite datasets to evaluate the use thereof on bridges made of reinforced concrete (RC), highlighting significant differences in terms of spatial precision, temporal frequency, geometry and resolution. A real case study shows the advantages and limitations of each dataset, demonstrating how InSAR can effectively complement conventional monitoring methods.

The 2017 paper ([2]) to Milan Lazecky et *al.* discloses advanced interferometric methods for processing long time series of Synthetic Aperture Radar (SAR) images. Such methods allow identifying seasonal effects through the decomposition of the differential SAR phase. The study highlights how high-resolution X-band SAR data, applied to the monitoring of structures such as bridges, allows distinguishing three main components of the SAR phase: linear trend of deformation, height of the structures above the ground and thermal expansion. The latter, particularly relevant in stable structures made of metal or reinforced concrete, can reach values comparable or higher with respect to the other components. Applications are also shown which confirm the effectiveness of InSAR techniques, suggesting innovative approaches for a better estimate of thermal expansion.

The 2023 paper ([3]) to Ma Peifeng et al. describes the SAR-Transformer method for analyzing deformations monitored by means of InSAR time series, applied to the Hong Kong-Zhuhai-Macao Bridge (HZMB). Using Sentinel-1 and COSMO-SkyMed images (2019-2022), validated with GPS and levelling data, the method decomposes InSAR signals into physical components, improving accuracy with respect to conventional models. The analysis revealed seasonal thermal expansion along the entire bridge, deflections due to concrete shrinkage and creep, decelerating subsidence in the artificial islands (more limited in non-dredged terrain), and linear movements of the cliffs due to soil consolidation and tides. Extreme events, such as typhoons and earthquakes, had limited impacts, confirming the overall stability of the bridge.

The 2018 paper ([4]) to Qin Xiaoqiong et al. addresses the obstacles in the large-scale application of Differential Synthetic Aperture Radar Interferometry (DInSAR) for bridge monitoring, related to the difficulty of detecting three-dimensional (3D) deformations and performing detailed structural risk assessments. The study suggests an improved time-series InSAR analysis approach, which integrates observations from multiple SAR sensors to reconstruct 3D deformations and enable more detailed assessments. Point targets (PTs) are classified and associated with specific features of bridges by means of temporal deformation models. The results confirm the effectiveness of the method in 3D deformation monitoring and structural risk assessment.

The 2018 paper ([5]) to Nan Ge et al. explores the potential of the Staring Spotlight mode, recently introduced in X-band SAR radars, such as TerraSAR-X and TanDEM-X, which offers an azimuthal resolution of 0.24 m, greater with respect to the Sliding Spotlight mode (1.1 m). For the first time, the use of this mode for SAR tomography is demonstrated. Interferometric and tomographic processors have been adapted to utilize the features of the Staring Spotlight mode, which allows obtaining a denser point cloud and more precise height estimates by virtue of the improved signal-to-noise ratio. A preliminary comparison between Sliding and Staring Spotlight TomoSAR showed a 5.1-5.5-fold increase in point cloud density and a relative height accuracy about 1.7 times higher.

The 2014 paper ([6]) to Kanika Goel et al. analyzes the monitoring of urban infrastructure deformations, which is essential to ensure safety and reduce economic losses. Ground deformations, caused by activities such as construction works or groundwater extraction, can be measured with millimetric precision by means of advanced stacking techniques in differential SAR interferometry. However, deformations due to thermal expansion of complex structures, such as buildings and bridges, require specific monitoring to avoid structural stress. The study examines different techniques, including Permanent Scatterer Interferometry (PSI), Distributed Scatterer Interferometry (DSI), Stable Point Network (SPN) and Small Baseline Subset Algorithm (SBAS), highlighting the effectiveness of high-resolution SAR missions, such as TerraSAR-X, in detecting seasonal movements.

## Purpose and object of the invention

It is the object of the present invention to provide an MTInSAR data-based early warning method for predicting structural behavior of existing bridges which overcomes the drawbacks and solves the issues of the prior art.

The present invention relates to a method according to the appended claims.

## Detailed description of embodiments of the invention

### List of Figures

The invention will now be described by way of a non-limiting illustration, with particular reference to the figures in the accompanying drawings, in which:

- Figure 1 shows a non-limiting embodiment of the method according to the present invention;
- Figure 2 shows a step of the method according to the present description, in which the change of the reference system of the displacement components is carried out;
- Figure 3 shows a further step of the method according to the present description, in which the change of reference system and the projection of the bridge displacement time series along the axes of a mobile reference system M-LCRS of the bridge are carried out;
- Figure 4 shows a further step of the method according to the present description, in which a trend-seasonal decomposition of a projected bridge displacement time series is carried out;
- Figure 5 shows analytical early warning thresholds with a longitudinal displacement, according to an aspect of the present invention;
- Figure 6 shows a first scenario of vertical displacements of the various spans of a bridge;
- Figure 7 shows a second scenario of vertical displacements of the various spans of a bridge;
- Figure 8 shows a third scenario of vertical displacements of the various spans of a bridge; and
- Figure 9 shows an analytical early warning threshold with a vertical displacement for the first scenario shown in Figure 6.

It is here specified that elements of different embodiments can be combined to provide further embodiments, without restrictions, by respecting the technical concept of the invention, as those skilled in the art will effortlessly understand from the description.

The present description also makes reference to the prior art for the implementation thereof in relation to the detail features not described, such as elements of minor importance usually used in the prior art in solutions of the same type, for example.

When an element is introduced, it is always understood that there can be "at least one" or "one or more".

When a list of elements or features is given in this description, it is understood that the finding according to the invention "comprises" or alternatively "consists of" such elements.

When listing features in the same sentence or bullet list, one or more of the single features can be included in the invention without connection with the other features on the list.

Two or more of the parts (elements, devices, systems) described above can be freely associated and considered as part kits according to the invention.

**Embodiments**

With the idea of utilizing satellite data for monitoring existing bridges, the use of MTInSAR algorithms can provide continuous and long-term monitoring; therefore, it allows studying slow or gradual deformations for extended periods, since it offers a wider temporal coverage and greater precision by utilizing data from multiple acquisitions.

The method of the invention is designed to be applied to a portfolio of existing reinforced concrete bridges with a simply supported structural scheme (a typology largely more widespread in the Italian panorama of bridges designed in the period 1950-1990) and aims to be fully automated.

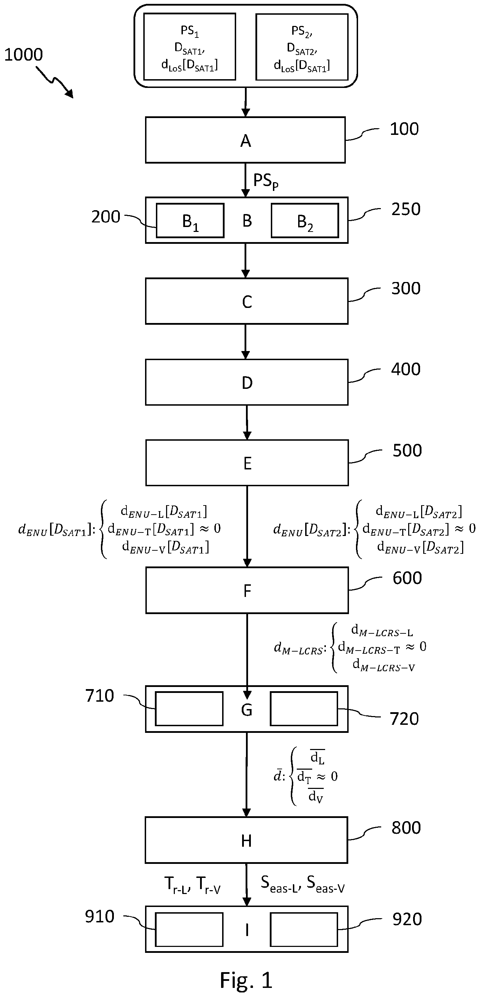

With reference to Figure 1, the method according to the present invention comprises different steps, which will be listed and explained below.

As mentioned, the suggested invention is a new early warning method for predicting the anomalous structural behavior of existing reinforced concrete bridges with a structural scheme consisting of simply supported beams and based on MTInSAR data. The procedure is described in detail below. It should be noted that the procedure is fully automated and follows the steps below.

The input data consists of a first plurality of permanent scatterers $PS_1$ obtained by means of MTInSAR algorithms on a first satellite radar image time series $I_A$ and a second plurality of permanent scatterers $PS_2$ obtained by means of MTInSAR algorithms on a second satellite radar image time series $I_D$.

In particular, the first satellite radar image time series $I_A$ is related to a first ascending orbital geometry of a satellite and the second satellite radar image time series $I_D$ is related to a second descending orbital geometry. The second descending orbital geometry is opposite to the first ascending orbital geometry along an axis of a satellite reference system.

Each permanent scatterer of the first plurality of permanent scatterers $PS_1$ is characterized by a first time series of satellite data $D_{SAT1}$. Similarly, each permanent scatterer of the second plurality of permanent scatterers $PS_2$ is characterized by a second satellite data time series $D_{SAT2}$. The first $D_{SAT1}$ and the second $D_{SAT2}$ satellite data time series each comprise a respective latitude, a respective longitude, a respective height above sea level, a respective coherence, a respective speed, and a respective bridge displacement time series $d_{LoS}$.

Respective bridge displacement time series $d_{LoS}$ means the displacement of each permanent scatterer as a function of time; such a bridge displacement time series $d_{LoS}$ is obtained as output from the MTInSAR algorithms.

The respective bridge displacement time series $d_{LoS}$ of the first satellite data time series $D_{SAT1}$ has a first time baseline comprising a first initial time instant $t_0^{SAT1}$ and a first series of N time instants subsequent $t_1^{SAT1}, t_2^{SAT1}, ..., t_N^{SAT1}$ to the first initial instant $t_0^{SAT1}$. Similarly, the respective bridge displacement time series $d_{LoS}$ of the second satellite data time series $D_{SAT2}$ has a second time baseline comprising a second initial time instant $t_0^{SAT2}$ and a second series of M time instants subsequent $t_1^{SAT2}, t_2^{SAT2}, ..., t_M^{SAT2}$ to the second initial instant $t_0^{SAT2}$.

Step A of the method comprises the selection of permanent scatterers related to the bridge under examination. In order to select the permanent scatterers geographically associable to the analyzed structure, a combination of criteria deriving from the attributes of the permanent scatterers themselves is implemented.

In particular, a common subset of bridge permanent scatterers $PS_P$ is selected in 100 from the first plurality of permanent scatterers $PS_1$ and the second plurality of permanent scatterers $PS_2$, so that the common subset of bridge permanent scatterers $PS_P$ comprises only permanent scatterers related to the bridge under examination.

In particular, according to an aspect of the invention, in order to adequately select the common subset of bridge permanent scatterers $PS_P$, a positional criterion and an accuracy criterion are applied. The positional criterion consists in the definition of a position in plan and a position in height.

In an aspect of the invention, the common subset of bridge permanent scatterers $PS_P$ is selected in plan, identifying those spatially comprised in the area of the bridge footprint. It is defined by means of latitude and longitude of a bridge centerline, using data freely available from geospatial data libraries (e.g., in shapefile format).

Advantageously, a sub-step A-1 of the method is thus performed, which includes excluding all the permanent scatterers of the first $PS_1$ and second $PS_2$ pluralities of permanent scatterers having the respective longitude not within a predefined range with respect to a longitude of the bridge centerline, or the respective latitude not within a predefined range with respect to a latitude of the bridge centerline.

However, the identification of the bridge centerline could not be sufficient, considering that due to the tolerance related to the positioning of the permanent scatterers, some permanent scatterers can belong to the bridge, but they could still fall outside the footprint area. Therefore, the bridge area can be increased by means of a buffer of a size equal to the resolution of the satellite image. In other words, according to an aspect of the invention, in sub-step A-1, the predefined range with respect to the longitude of the bridge centerline and the predefined range with respect to the latitude of the bridge centerline are selected by defining an area of the bridge footprint as an increase of the bridge centerline both in the direction transverse with respect to the bridge centerline and in the longitudinal direction with respect to the bridge centerline by an amount equal to a spatial resolution of the first satellite radar image time series $I_A$ and of the second satellite radar image time series $I_D$.

The selection based on the positional criterion continues by analyzing the compatibility between the height above sea level of the viaduct and that attributed to each permanent scatterer. Therefore, a sub-step A-2 of the method is carried out, in which, from the permanent scatterers remaining after sub-step A-1, all the permanent scatterers having the height above sea level not within a predefined range with respect to a height above sea level of the bridge centroid are excluded.

Height positioning, like planimetric positioning, is also affected by uncertainties. To take this into account, in one aspect of the invention, before sub-step A-2 and after sub-step A-1, a sub-step A-1-1 is carried out, during which each permanent scatterer of the permanent scatterers remaining after sub-step A-1 is rigidly translated by an amount equal to a difference between the respective mean height above sea level and a height above sea level of the bridge centroid, in order to obtain a respective correct height above sea level for each of said permanent scatterers.

Advantageously, the method according to the present invention comprises a step A-1-2, during which all permanent scatterers of the permanent scatterers remaining after sub-step A-1, having the correct height above sea level not within a predefined range with respect to the height above sea level of the bridge centroid, are excluded. Preferably, said predefined range is equal to $\pm$ 1 m.

As for the accuracy criterion, once the points which do not comply with the positional criterion have been eliminated, the method comprises a sub-step A-3, in which, from the permanent scatterers remaining after sub-step A-2, all the permanent scatterers having the respective coherence below a predefined coherence value, as well as the respective speed within a predefined range with respect to a predefined speed value, are excluded.

The coherence of a permanent scatterer indicates the accuracy of the displacement time series estimated in the direction LoS with respect to the phase model implemented in the MTInSAR processing algorithm.

According to an aspect of the invention, as for coherence, the minimum value selected is equal to 0.65, reasonably set according to the MTInSAR algorithms present in the literature. Other predefined values are possible according to the invention.

As for the velocity along the LoS, in one embodiment, during sub-step A-3, all permanent scatterers having the respective speed belonging to 5% and 95% order fractiles of a normal distribution of the respective speeds of the permanent scatterers which remain after sub-step A-2, are excluded.

It should be noted that the first satellite data time series $D_{SAT1}$ and the second satellite data time series $D_{SAT2}$ are often inconsistent from the time baseline point of view, i.e. the acquisitions cannot be concurrent and be characterized by highly variable sampling frequencies (e.g., some acquisitions of the same dataset can be even months apart).

In this specific application, for the purposes of the next step, it is necessary that the two satellite datasets, i.e., the first satellite data time series $D_{SAT1}$ and the second satellite data time series $D_{SAT2}$, have the same time baseline.

Therefore, the method comprises a step B, during which, if the first initial instant $t_0^{SAT1}$ does not coincide with the second initial instant $t_0^{SAT2}$, one of the following sub-steps B-1 or B-2 is carried out. In particular, sub-step B-1 includes that, if the first initial time instant $t_0^{SAT1}$ is subsequent to the second initial time instant $t_0^{SAT2}$, in 200, all the values between the second initial time instant $t_0^{SAT2}$ and the first initial time instant $t_0^{SAT1}$ are eliminated from the respective bridge displacement time series $d_{LoS}$ of the second satellite data time series $D_{SAT2}$. Sub-step B-2 includes that, if the second initial time instant $t_0^{SAT2}$ is subsequent to the first initial time instant $t_0^{SAT1}$, all values between the first initial time instant $t_0^{SAT1}$ and the second initial time instant $t_0^{SAT2}$ are eliminated, in 250, from the respective bridge displacement time series $d_{LoS}$ of the first satellite data time series $D_{SAT1}$.

Furthermore, the method comprises a step C, during which if $M \neq N$ and each second subsequent time instant of the first series of N time instants $t_1^{SAT1}, t_2^{SAT1}, ..., t_N^{SAT1}$ does not correspond temporally to the respective each first subsequent time instant of the second series of M subsequent time instants $t_1^{SAT2}, t_2^{SAT2}, ..., t_M^{SAT2}$, a linear interpolation is carried out in 300 of the respective bridge displacement time series $d_{LoS}$ of the first satellite data time series $D_{SAT1}$, and/or the respective bridge displacement time series $d_{LoS}$ of the second satellite data time series $D_{SAT2}$, so that both have a single time baseline comprising a single series of K subsequent time instants $t_1', t_2', ..., t_K'$, where K > M and K > N.

Step D of the method according to the invention comprises the definition, in 400, of a local mobile reference system of the bridge, referred to as the Mobile-Local Cartesian Reference System (M-LCRS). Such a local mobile reference system M-LCRS of the bridge, has a first axis L oriented along a longitudinal direction of the bridge, a second axis T oriented along a transverse direction of the bridge, and a third axis V perpendicular to the first L and second T axes.

According to an aspect of the invention, the bridge can be divided into a plurality of bridge portions. Each bridge portion is associated with a respective bridge portion centroid and the method of the present invention can be performed for each bridge portion of the plurality of bridge portions.

Preferably, the bridge portions are at least three. More preferably, the bridge portions are at least three and in an odd number.

It should be noted that each bridge portion shall be associated with at least one permanent scatterer of the first satellite data time series $D_{SAT1}$ and of the second satellite data time series $D_{SAT2}$.

If there are more permanent scatterers per bridge portion, the method includes averaging the time series of all the permanent scatterers to be assigned to the centroid of the bridge portion investigated.

Advantageously, the local mobile reference system M-LCRS of the bridge can be defined for each bridge portion to be investigated.

Step E of the method according to the invention comprises projecting, in 500, into an ENU reference system, the respective bridge displacement time series $d_{LoS}$ of the first $D_{SAT1}$ and second $D_{SAT2}$ satellite data time series and for each permanent scatterer of the common subset of bridge permanent scatterers $PS_P$, obtaining a respective ENU bridge displacement time series $d_{ENU}$ having a respective East component $D_{ENU-E}$ along an East axis E of the ENU reference system, a respective North component $d_{ENU-N}$ along a North axis N of the ENU reference system, and a respective vertical component $d_{ENU-U}$ along a vertical axis U of the ENU reference system, perpendicular to the East axis E and to the North axis N.

As better specified below:

- the respective North component $d_{ENU-N}$ is considered negligible;
- the respective East component $D_{ENU-E}$ of the first satellite data time series $D_{SAT1}$ is equal to the respective East component $D_{ENU-E}$ of the second satellite data time series $D_{SAT2}$; and
- the respective vertical component $D_{ENU-U}$ of the first satellite data time series $D_{SAT1}$ is equal to the respective vertical component $D_{ENU-U}$ of the second satellite data time series $D_{SAT2}$.

Step F of the method according to the invention comprises the projection, in 600, in the mobile reference system M-LCRS of the bridge, of the respective ENU bridge displacement time series $d_{NEU}$ and for each permanent scatterer of the common subset of bridge permanent scatterers $PS_P$, obtaining a M-LCRS bridge displacement time series $d_{M-LCRS}$ having a longitudinal component $d_{M-LCRS-L}$ along the first axis L of the local mobile reference system M-LCRS of the bridge, a transverse component $d_{M-LCRS-T}$ along the second axis T of the local mobile reference system M-LCRS of the bridge, and a vertical component $d_{M-LCRS-V}$ along the third axis V of the local mobile reference system M-LCRS of the bridge.

As better specified below, the transverse component $d_{M-LCRS-T}$ is considered negligible.

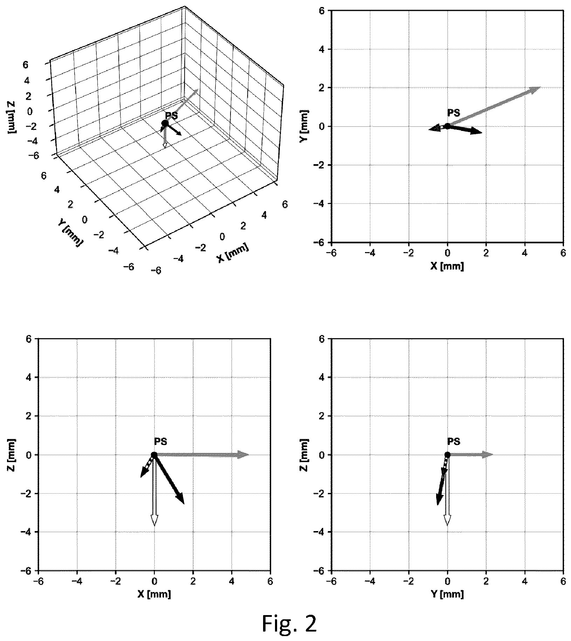

Such a change of reference system, from ENU to M-LCRS, is depicted in the three-dimensional and two-dimensional diagrams in Figure 2, where the black vector indicates the component of the respective bridge displacement time series $d_{LoS}$ of the first satellite data time series $D_{SAT1}$, the dashed vector indicates the component of the respective bridge displacement time series $d_{LoS}$ of the second satellite data time series $D_{SAT2}$, the white vector with a black outline indicates the vertical component $d_{M-LCRS-V}$ of the M-LCRS bridge displacement time series $d_{M-LCRS}$ along the third axis V of the local mobile reference system M-LCRS of the bridge, and the gray vector indicates the transverse component $d_{M-LCRS-T}$ of the M-LCRS bridge displacement time series $d_{M-LCRS}$ along the second axis T of the local mobile reference system M-LCRS of the bridge.

In one aspect of the invention, the first $D_{SAT1}$ and second $D_{SAT2}$ satellite data time series each further comprise a respective Azimuth angle $\alpha$ and a respective incidence angle $\theta$.

From a mathematical point of view, the respective bridge displacement time series $d_{LoS}$ can be defined as the product of the displacement vector d along the 3 directions of an ENU reference system - i.e. an East axis E, a North axis N, and a vertical axis, U - and the vector $Q_{LoS}$ of the direction cosines of the satellite reference system (the subscripts of the respective bridge displacement time series $d_{LoS}$ indicate the axes of the reference system into which it is decomposed):

$$d_{LoS} = \hat{u}_{LoS}d \qquad (1)$$

$$\hat{u}_{LoS} = [\sin\theta\cos\alpha; -\sin\theta\sin\alpha; \cos\theta] \qquad (2)$$

$$d = [d_E; d_N; d_U]^T \qquad (3)$$

Advantageously, in step E, the respective ENU bridge displacement time series $d_{ENU}$ is obtained by solving, for both the first $D_{SAT1}$ and the second $D_{SAT2}$ satellite data time series, the following equation (4):

$$d_{LoS} = d_E\sin\theta\cos\alpha - d_N\sin\theta\sin\alpha + d_U\cos\theta \qquad (4)$$

Starting from equation (4), therefore, by indicating with superscript "A" the variables relating to the ascending dataset and with superscript "D" the variables relating to the descending dataset, it is possible to write the following system of equations (5):

$$\begin{cases} d_{LoS}^A = d_E^A \sin\theta^A \cos\theta^A - d_N^A \sin\theta^A \sin\theta^A + d_U^A\cos\theta^A \\ d_{LoS}^D = d_E^D \sin\theta^D \cos\theta^D - d_N^D \sin\theta^D \sin\theta^D + d_U^D\cos\theta^D \end{cases} \qquad (5)$$

Since the satellite moves along a quasi-polar orbit, i.e., along the North axis N of the ENU reference system, the components $d_N^A$ and $d_N^D$ of the system (5) can be considered null, since the line of sight of the satellite has a direction perpendicular to the orbit it follows.

Furthermore, the ascending dataset and the descending dataset, even though they were acquired at different time intervals, reflect the same macroscopic bridge displacement phenomenon. In other words, the components $d_E^A$ and $d_E^D$ can be considered identical, as well as the components $d_U^A$ and $d_U^D$.

From the above, the system of equations (5) can be reduced to the following system of equations (6):

$$\begin{cases} d_{LoS}^A = d_E \sin\theta^A \cos\theta^A + d_U\cos\theta^A \\ d_{LoS}^D = d_E \sin\theta^D \cos\theta^D + d_U\cos\theta^A \end{cases} \qquad (6)$$

On this basis, by fixing some simplifying assumptions, it is possible to obtain the M-LCRS bridge displacement time series $d_{M\text{-}LCRS}$ in the mobile reference system M-LCRS of the bridge.

Furthermore, to mathematically describe the change of reference system (from E-N-U to L-T-V), it is possible to write:

$$[d_{ENU-E}; d_{ENU-N}; d_{ENU-U}]^T = R_V R_T R_L [d_{M-LCRS-L}; d_{M-LCRS-T}; d_{M-LCRS-V}]^T \qquad (7)$$

where $R_V$, $R_T$ and $R_L$ are the rotation matrices and can be mathematically defined as follows:

$$R_V = \begin{bmatrix} \cos\gamma & \sin\gamma & 0 \\ -\sin\gamma & \cos\gamma & 0 \\ 0 & 0 & 1 \end{bmatrix} \qquad (8)$$

$$R_T = \begin{bmatrix} \cos\beta & 0 & \sin\beta \\ 0 & 1 & 0 \\ -\sin\beta & 0 & \cos\beta \end{bmatrix} \qquad (9)$$

$$R_L = \begin{bmatrix} 1 & 0 & 0 \\ 0 & \cos\delta & \sin\delta \\ 0 & -\sin\delta & \cos\delta \end{bmatrix} \qquad (10)$$

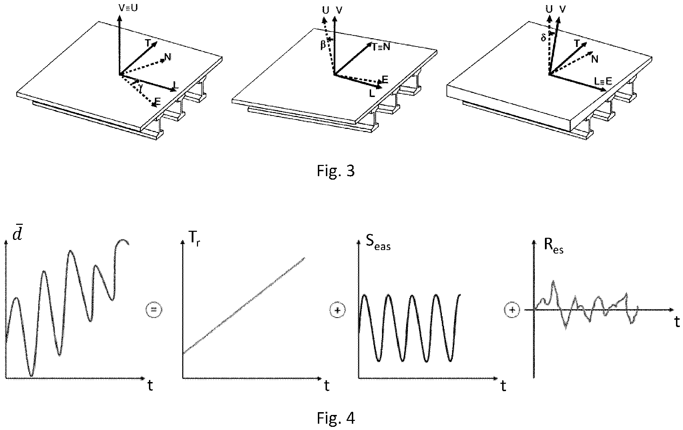

where $\gamma$, $\beta$ and $\delta$ are the angles between E and L when V coincides with U, between U and V when T coincides with N and between U and V when L coincides with E (see Figure 3).

In equation (7), the terms $_{M\text{-}LCRS\text{-}V}$, $d_{M\text{-}LCRS\text{-}T}$ and $d_{M\text{-}LCRS\text{-}L}$, which represent the components of the M-LCRS bridge displacement time series $d_{M\text{-}LCRS}$ along the new axes of the mobile reference system M-LCRS of the bridge, are unknown. To find the three unknown values, three sets of LoS acquisition data from different geometries should be needed. Considering that usually only two data sets (ascending and descending) are available, one of the displacement components has to be neglected to solve the system. Therefore, according to a hypothesis, the transversal $d_{M\text{-}LCRS\text{-}T}$ component is assumed to be negligible.

For each analyzed area, the two unknowns are calculated by updating the values of the rotational matrices $R_V$, $R_T$ and $R_L$ according to the directions of the analyzed bridge portion, defined according to the angles $\gamma$, $\beta$ and $\delta$. Such angles are defined as in Figure 3, and are positive in a clockwise direction and between 0° and 180°. The steps described can then be repeated for each time instant of the single series of K subsequent time instants $t'_1, t'_2, \ldots, t'_K$, so as to obtain the M-LCRS bridge displacement time series $d_{M\text{-}LCRS}$ in the M-LCRS system.

The method according to the invention further comprises a step G during which a spatial averaging of the longitudinal component $d_{M\text{-}LCRS\text{-}L}$ of the projected bridge displacement time series $d_{M\text{-}LCRS}$ is carried out in 710, as well as a spatial averaging, in 720, of the vertical component $d_{M\text{-}LCRS\text{-}V}$ of the projected bridge displacement time series $d_{M\text{-}LCRS}$, said spatial averaging of the longitudinal component $d_{M\text{-}LCRS\text{-}L}$ and said spatial averaging of the vertical component $d_{M\text{-}LCRS\text{-}V}$ each being carried out with respect to the permanent scatterers of the common subset of bridge permanent scatterers $PS_P$, in order to obtain a longitudinal component $\overline{d_L}$ of an $\overline{d}$ averaged bridge displacement time series, and a vertical component $\overline{d_V}$ of the averaged bridge displacement time series $\overline{d}$, respectively.

The method according to the invention further comprises a step H comprising the processing of the time series in the new reference system, in order to select specific parts of the series themselves and thus correlate them to physical phenomena characterizing the operating conditions of the bridge. In general, it is of interest to estimate the seasonal fluctuations to which the bridge is subjected, the extent of the actual displacements which are recorded on the bridge in the directions of interest (longitudinal and vertical) and the trend of each component.

In particular, during step H, the longitudinal component $\overline{d_L}$ of the averaged bridge displacement time series $\overline{d}$ and the vertical component $\overline{d_V}$ of the averaged bridge displacement time series d according to a trend-seasonal decomposition STL-LOESS method (known per se) are processed in 800, in order to extract a longitudinal trend component $T_{r\text{-}L}$ along the first axis L and a vertical trend component $T_{r\text{-}V}$ along the third axis V, as well as a longitudinal seasonal component $S_{eas\text{-}L}$ along the first axis L and a vertical seasonal component $S_{eas\text{-}V}$ along the third axis V.

This method is described by means of the following equation 9 and is shown in an exemplary manner in Figure 4.

$$\overline{d(t)} = T_r(t) + S_{eas}(t) + R_{es}(t) \qquad (11)$$

where $T_r$ means the trend component, $S_{eas}$ means the seasonal component, and $R_{es}$ means the remaining part (reminder). In order to estimate all the contributions, it is necessary to implement an iterative procedure [7], whose main steps are reported below:

- carrying out a weighted moving average (LOESS) on the original time series, in order to estimate the local trend;

- purifying the estimated trend from the original historical series and estimating the seasonality and noise components. This step can be carried out iteratively to improve the accuracy of the seasonal estimate;

- applying the LOESS algorithm to the seasonality and noise components, to estimate the local seasonality component. The local component represents trends which can differ from year to year, adapting to the specific conditions of the data under examination; and

- deriving the noise component, as the difference between the estimated seasonality component and those obtained from the previous step. The difference represents the residual decomposition error, referred to as a reminder.

It is necessary to specify that the trend-seasonal decomposition method is usually applied to time series which are characterized by a regular sampling frequency. Therefore, considering that the averaged bridge displacement time series d could not have a regular sampling frequency, in one aspect of the invention, after step G and before step H, a sub-step G-1 is carried out, in which the averaged bridge displacement time series d is linearly resampled so that the single series of K subsequent time instants $t'_1, t'_2, ..., t'_K$ is characterized by a predefined time frequency. Preferably, the predefined time frequency is a daily frequency.

Such an operation ensures that the information detected by the satellite data (frequency ranging from 4 to 16 days for X-band satellites) is not lost and that the assumptions underlying the application of the STL method are satisfied.

Finally, the filtered and resampled displacement components are estimated, which can be directly related to different phenomena characterizing the operating conditions of the bridge, including the vertical and horizontal displacement trends which can be associated with gravitational loads from traffic and thermal loads, respectively, and the seasonality components which can be associated with the effects of the temperature variation found in the input data.

The method according to the invention further comprises a step I, which essentially consists in the definition of the output provided by the invention and therefore in the detection of a possible structural anomaly of the bridge.

To this end, attention thresholds are defined, calculated as a function of analytical models and based on different possible scenarios. Such thresholds, which represent a sort of limit for the trend component $T_r$ and for the seasonal component $S_{eas}$ of the averaged displacement time series d, are defined in order to automatically verify whether the conditions of the focused bridge exhibit unexpected behavior.

Considering the impossibility of knowing the real loads acting on the bridge and the initial deformation thereof (initial deformation means the deformation of the bridge at the time of the first acquisition of the satellite data, i.e., the first $t_0^{SAT1}$ or the second $t_0^{SAT2}$ time instant based on sub-steps B-1 and B-2), the result of the suggested method reveals the current performance of the bridge and especially it reveals whether sudden and alarming variations in terms of displacement and speed are present.

During step I of the method according to the invention, the longitudinal thermal component $S_{eas-L}$ is compared, in 910, with a predefined longitudinal attention range defined between a minimum longitudinal attention threshold $d_{Term-min}$ and a maximum longitudinal attention threshold $d_{Term-max}$. Furthermore, the vertical trend component $T_{r-V}$ is compared, in 920, with a maximum vertical attention threshold. The structural anomaly of the bridge is detected if the longitudinal thermal component $S_{eas-L}$ is outside the predefined longitudinal attention range, or if the vertical trend component $T_{r-V}$ exceeds the predefined vertical attention threshold.

In relation thereto, according to an aspect of the invention, before step I, a sub-step H-1 is carried out, in which the method is provided, in input, with an average daily temperature time series Temp detected by a meteorological station in an area close to the bridge having a third time baseline comprising:

- a third initial time instant $t_0^{Temp}$ equal to the first initial time instant $t_0^{SAT1}$ if sub-step B-1 has been carried out, or equal to the second initial time instant $t_0^{SAT2}$ if sub-step B-2 has been carried out; and

- a third series of K time instants subsequent $t_1^{Temp}, t_2^{Temp}, ..., t_K^{Temp}$ to the third initial time instant $t_0^{Temp}$ equal to the single series of K subsequent time instant $t'_1, t'_2, ..., t'_K$.

Preferably, if the required temperature data is not available for each time instant of the single series of K subsequent time instants $t'_1, t'_2, ..., t'_K$ of the averaged bridge displacement time series d, it is possible to perform an interpolation with a mathematical model of the following type:

$$\text{T}(m) = A + B \cdot \cos\big(\omega \cdot (m - \phi_T)\big) \qquad (12)$$

where A is the annual mean temperature, B is the amplitude, $\omega$ is the frequency and is obtained by assuming a reference period equal to 12 months, $\phi_T$ is the phase shift, and m is a day of the year expressed in months. B, $\omega$ and $\phi_T$ are equal to the average of the values thereof, obtained for each year of station acquisition coinciding with those of satellite acquisition. By applying the mathematical model in equation 12, an initial temperature $T_0$, a minimum temperature $T_{min}$ and a maximum temperature $T_{max}$ can be defined. Initial temperature $T_0$ means the temperature relative to the third initial time instant $t_0^{Temp}$, maximum temperature $T_{MAX}$ means the maximum temperature of the average daily temperature time series Temp, and minimum temperature $T_{MIN}$ means the minimum temperature of the average daily temperature time series Temp.

Advantageously, the method comprises a sub-step H-2, in which, with respect to the predefined initial temperature $T_0$, a first temperature difference $\Delta T_1$ is calculated as the difference between the maximum temperature $T_{MAX}$ and the initial temperature $T_0$, as well as a second temperature difference $\Delta T_2$ is calculated as the difference between the minimum temperature $T_{MIN}$ and the initial temperature $T_0$.

Thereby, in one aspect of the invention, during step I, the minimum longitudinal attention threshold $_{Term-min}$ is calculated as $d_{Term-min} = \alpha_{CTE} \cdot \Delta T_2 \cdot L_{prog}$, and the maximum longitudinal attention threshold $d_{Term-max}$ is calculated as $d_{Term-max} = \alpha_{CTE} \cdot \Delta T_1 \cdot L_{prog}$, $\alpha_{CTE}$ being the thermal expansion coefficient of a concrete equal to 10E-06 °C$^{-1}$, $L_{prog}$ being a progressive length of the respective bridge portion centroid from a fixed support end of the bridge. In other words, progressive length $L_{prog}$ means the length of the centroid of the bridge portion considered from the fixed support of the bridge, so that the progressive length of the first bridge portion, close to the fixed support, will be equal to the length of the centroid of the first bridge portion only, the progressive length of the second bridge portion will be equal to the length of the centroid of the second bridge portion from the end of the first bridge portion added to the length of the first bridge portion, and so on up to the n-th bridge portion close to a mobile support of the bridge.

Since in the present invention reference is made to simply supported bridges, fixed support of the bridge means the end of the bridge which is not capable of moving in any direction, while mobile support of the bridge means the other end of the bridge capable of moving in the longitudinal and/or transverse direction of the bridge.

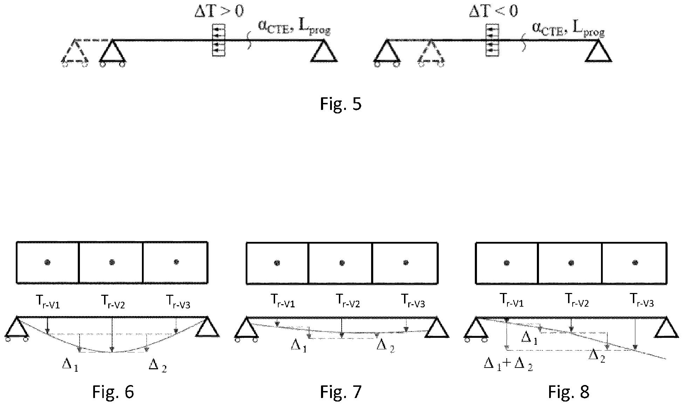

This threshold, diagrammatically shown in Figure 5, although it neglects some structural details, such as the stiffness of the supports, allows evaluating in a fairly conservative manner the possible longitudinal displacements for thermal loads, and it suggests, if exceeded, possible malfunctions of the supports or the onset of failures and landslides such as slow kinematic movements that are not visible to the naked eye.

In particular, in Figure 5, the dashed line shows the longitudinal component $\overline{d_L}$ of the averaged bridge displacement time series d in two cases: in the first case, there is a positive temperature difference ($\Delta T > 0$) which leads to an expansion of the bridge, with a longitudinal component $\overline{d_L}$ of the averaged bridge displacement time series d conventionally considered positive); in the second case, there is a negative temperature difference ($\Delta T < 0$) which leads to a contraction of the bridge, with a longitudinal component $\overline{d_L}$ of the averaged bridge displacement time series d conventionally considered negative).

As for the maximum vertical attention threshold, such a value can be linked to the gravitational loads acting on the bridge (e.g., self-weight and traffic loads) and is certainly dependent on the material degradation of the structural components and the related environmental conditions. Looking in detail at each factor, the increase in gravitational loads during the useful life (e.g., replacement of old road barriers with new, more resistant barriers, addition of new layers of bitumen to the road surface) or the pre-compression losses in the longitudinal elements of the work could cause, for the structural typology considered, a greater vertical deflection in the center of the span.

Furthermore, the same environmental conditions could modify the vertical deformation of the bridge, as it occurs due to the thermal action which produces a seasonal excursion of the vertical deformation. If under thermal action the effect could be limited, some boundary conditions of the analyzed bridge (e.g., subsidence, landslides, hydro-geomorphological actions) could produce uniform or differential displacements between the sub-areas of the same span. Therefore, it is apparent how the observation of differential displacements can highlight the presence of other phenomena, such as discontinuities between abutments and embankment, or between the decks of two adjacent spans. Instead, uniform displacements reveal vertical discontinuities on the structural elements. These observations lead to define three different possible scenarios, as depicted in Figures 6-8, and especially lead to define two vertical load threshold values.

As a first approximation, from the trend-seasonal decomposition method of step H, for each bridge portion considered, the vertical trend component $T_{r-V}$ has a linear trend.

For each bridge portion considered, there is a respective value of the vertical trend component $T_{r-V}$ of the bridge displacement series.

According to an aspect of the invention, the step comprises the execution of a sub-step I-1, during which, if the vertical trend component $T_{r-V}$ is greater in the central bridge portion with respect to the side bridge portions along the longitudinal direction of the bridge, the maximum vertical attention threshold is calculated as $\dfrac{F_{Traffic} \cdot L_{tot}^3}{48 \cdot E_C \cdot J_{deck}}$, $E_C$ being the Young's modulus of a concrete, $J_{deck}$ being the moment of inertia about the transverse direction of the bridge, $L_{tot}$ being the total length of the bridge span, and $F_{Traffic}$ being assumed to be 600 kN.

Otherwise, a sub-step I-2 is carried out, during which the vertical trend component $T_{r-V}$ is summed over an annual time interval. In this case, the structural anomaly of the bridge is detected if such a sum exceeds a maximum annual vertical attention threshold.

In one aspect of the invention, three operational scenarios can be defined, shown in Figures 6-8 for three bridge portions, and defined below.

**Scenario 1 (see Figure 6)**

The vertical trend component $T_{r-V}$ of the bridge displacement series is greatest in the central bridge portion. This implies that the differences $\Delta_i$ are half positive and half negative.

For example, if n sub-areas are present, where n is an odd number, it is possible to state that $\Delta_{sx} = \sum_{i=1}^{(n-1)/2} \Delta_i \geq 0$, $\quad \Delta_{dx} = \sum_{i=(n+1)/2}^{n-1} \Delta_i \leq 0$ where $\Delta_{sx}$ and $\Delta_{dx}$ are the sums of the differences of the cumulative displacements to the left and to the right of the central bridge portion.

In this scenario, if the entire deck is subsiding, subsidence is prevented by checking that the absolute value of the difference between $\Delta_{sx}$ and $\Delta_{dx}$ is higher than the maximum accuracy value (depending on the type of satellite data and the processing algorithm).

**Scenario 2, vertical subsidence displacements (see Figure 7)**

Some sub-areas of the bridge have a vertical trend component $T_{r-V}$ of the bridge displacement series which is greater than others. Also in this case, if n sub-areas are present, where n is an odd number, it is possible to state that

$$\Delta_{sx} = \sum_{i=1}^{(n-1)/2} \Delta_i \geq 0, \quad \Delta_{dx} = \sum_{i=(n+1)/2}^{n-1} \Delta_i \leq 0$$, but the absolute value of the difference between $\Delta_{sx}$ and $\Delta_{dx}$ is lower than the maximum accuracy value (depending on the type of satellite data and the processing algorithm).

**Scenario 3, differential displacements (see Figure 8)**

All sub-areas of the bridge have a vertical trend component $T_{r-V}$ of the bridge displacement series with the same direction, and therefore they both have $\Delta_{sx}$ and $\Delta_{dx}$ either positive or negative.

Advantageously, after sub-step I-2, the method according to the invention thus includes a further sub-step I-3, in which a plurality of differences of the vertical trend component $\Delta_i$ is defined, consisting of differences between the vertical trend components $T_{r-V}$ of two bridge portions which are consecutive with respect to the longitudinal direction L.

Advantageously, the method according to the invention comprises a sub-step I-4, in which a left vertical component difference $\Delta_{sx}$ is calculated as the sum of the values of the plurality of vertical trend component differences $\Delta_i$ of the bridge portions to the left of the central bridge portion and a right vertical component difference $\Delta_{dx}$ is calculated as the sum of the values of the plurality of vertical trend component differences $\Delta_i$ of the bridge portions to the right of the central bridge portion.

Advantageously, the method according to the invention comprises a sub-step I-5, in which if the right difference $\Delta_{dx}$ and the left difference $\Delta_{sx}$ have the same algebraic sign, the structural anomaly of the bridge is linked to differential displacement phenomena. In other words, scenario 3, defined above, is applicable.

Otherwise, the method according to the invention comprises a sub-step I-6, in which an absolute value of a difference between the left difference $\Delta_{sx}$ and the right difference $\Delta_{dx}$ is calculated.

Advantageously, the method according to the invention comprises a sub-step I-7, in which, if the absolute value of the difference between the left difference $\Delta_{sx}$ and the right difference $\Delta_{dx}$ is greater than a maximum difference value, the structural anomaly of the bridge is linked to a subsidence phenomenon, otherwise the structural anomaly of the bridge is linked to phenomena of material degradation and/or increase in gravitational loads. In other words, if the absolute value of the difference between the left difference $\Delta_{sx}$ and the right difference $\Delta_{dx}$ is greater than the maximum difference value, scenario 2 defined above is applicable; on the contrary, scenario 1 defined above is applicable. Preferably, the maximum difference value is an accuracy value related to the MTInSAR algorithm used. More preferably, the maximum difference value is equal to 1 mm/year multiplied by the satellite acquisition time interval.

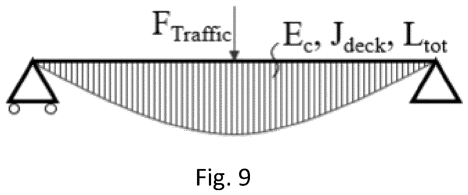

Figure 9 shows the case in which scenario 1 is applicable, in which, as previously described, the maximum vertical attention threshold is defined by the following relation:

$$\frac{F_{Traffic} \cdot L_{tot}^3}{48 \cdot E_C \cdot J_{deck}} \tag{13}$$

If the scenarios 2 and 3 occur, the threshold, as defined by equation 13, loses meaning, and therefore it is necessary to understand the speed of occurrence of subsidence phenomena or differential displacements. Therefore, as described above, the maximum vertical attention threshold is equal to a value in terms of predefined vertical displacement (for example 2 mm/year, which, if exceeded, indicates a high speed of occurrence of the phenomenon [8]) multiplied by the satellite acquisition time interval.

In accordance with an aspect of the invention, it is possible to provide a computer program comprising instructions which, when the program is executed by a computer, cause the computer to carry out the steps of the method according to the present disclosure.

**Advantages of the Invention**

The suggested invention aims to provide a complete tool capable of providing an early warning to predict the structural behavior of existing bridges based on satellite data. The improvements and advantages suggested by the invention fall within each step of the disclosed procedure and will be detailed below. At the same time, it is necessary to specify that the invention is currently the only method capable of providing a quantitative and qualitative assessment of the displacements which occur on a bridge of a road network mainly utilizing satellite data, in addition to being the only method which provides an early warning based on possible real displacement scenarios and entirely new quantitative thresholds. In addition, the invention is characterized in that it provides a true prediction of the risk related to bridge infrastructures, unlike other existing works which aim to understand the behavior of buildings or bridges which have already exhibited issues and/or collapses.

The advantages and novelties of the suggested system are detailed below for each step of the procedure.

During step A, the selection of the permanent scatterers characterizing the bridge is discussed. Although the criteria based on the various attributes already exist, no existing work details and indicates a selection order such as that suggested. In fact, a detailed and ordered flow of how to select the permanent scatterers PS is provided, based on a positional criterion (location in plan and height) and an accuracy criterion (coherence and speed values).

During steps E and F, a change of coordinates in the local reference system of the M-LCRS bridge is suggested. The novelty is linked to the fact that, with respect to existing works reporting the displacements to the ENU reference system, the suggested method takes into account the shape of the analyzed structure. It is in fact necessary to consider that, in practical situations, many existing bridges have a slope, or many others are curved. Especially in the latter case, spans of the same bridge positioned differently with respect to the LoS have completely different displacements, a situation which is totally incorrect, especially when there are no critical conditions. Therefore, regardless of the geometry of the system, the displacements of the structure can be materially overestimated or underestimated, thus not allowing for an accurate assessment of the current behavior of the bridge. Situations like the latter can be avoided by using the suggested change of reference system, with which it is possible to analyze any geometry, especially using the logic of dividing the bridge spans into bridge portions and then dividing the displacements into reference systems which follow the longitudinal and vertical extension of the bridge.

Step H consists in processing the time series in the new reference system, in order to select specific parts of the series themselves and therefore correlate them to physical phenomena characterizing the operating conditions of the bridge. Although the STL model is not new per se, such an approach has never been used for monitoring purposes with satellite data. In particular, in the logic used so far in similar studies, displacements and speeds are used in order to provide synthetic parameters to evaluate the health status of the bridge. In this case, the invention provides a method for identifying very specific displacement components which can be linked to well-defined scenarios, both in terms of acting load and in terms of structure response. In the case in hand, the seasonal component can be directly correlated to the effect of temperature, while the trend components can be directly linked to thermal loads, degradation situations, vertical loads and possible landslide phenomena in progress.

Step I consists in the definition of the output provided by the invention and therefore of the detection of a possible structural anomaly of the bridge. This is certainly the most innovative and important part of the invention. First of all, a new attention threshold is defined for longitudinal displacements, based on a mathematical temperature model for the calculation of $\Delta T$ which allows tracing a trend of the threshold over time. Furthermore, two new attention thresholds are defined for vertical displacements, based on real scenarios. The first threshold is calculated on the operating conditions of the bridge, in the absence of particular issues, while the second threshold refers to possible subsidence or differential failures (e.g., landslides) which can occur on the bridge and which are not easily visible to the naked eye with a simple visual inspection. The whole is defined analytically, utilizing the possible differences in terms of deformations which can occur in existing simply supported reinforced concrete bridges, correlating them to those which can represent the triggering causes.

Finally, the suggested method can be totally automated, and depending on the availability of new data (new satellite acquisitions) and respective interferometric processing, it can provide the early warning automatically and immediately.

Preferred embodiments have been described above and variations of the present invention have been suggested, but it should be understood that those skilled in the art may make modifications and changes without departing from the related scope of protection, as defined by the appended claims.

**References**

[1] Calò, Mirko; Ruggieri, Sergio; Nettis, Andrea; Uva, Giuseppina. Multi source Interferometry Synthetic Aperture Radar for monitoring existing bridges: a case study. In: Eurostruct 2023 - Digital Transformation in Sustainability, a cura di Alfred Strauss e Konrad Bergmeister. Ernst & Sohn, A Wiley Brand, 2023, pp. 787-793.

[2] Milan Lazecky, Ivana Hlavacova, Matus Bakon, Joaquim J. Sousa, Daniele Perissin, and Gloria Patricio. Bridge Displacements Monitoring Using Space-Borne X-Band SAR Interferometry. IEEE Journal of Selected Topics in Applied Earth Observations and Remote Sensing, vol. 10, no. 1, January 2017, pp. 205-210.

[3] Ma, Peifeng; Wu, Zherong; Zhang, Zhengjia; Au, Francis T. K. SAR-Transformer-based decomposition and geophysical interpretation of InSAR time-series deformations for the Hong Kong-Zhuhai-Macao Bridge. Remote Sensing of Environment, vol. 302, 2024, Article 113962.

[4] Xiaoqiong, Qin; Ding, Xiaoli; Liao, Mingsheng. Three-Dimensional Deformation Monitoring and Structural Risk Assessment of Bridges by Integrating Observations from Multiple SAR Sensors. Proceedings of the IGARSS 2018 - 2018 IEEE International Geoscience and Remote Sensing Symposium, July 2018.

[5] Ge, Nan; Rodriguez Gonzalez, Fernando; Wang, Yuanyuan; Shi, Yilei; Zhu, Xiao Xiang. Spaceborne Staring Spotlight SAR Tomography-A First Demonstration with TerraSAR-X. arXiv:1807.06826, July 18, 2018.

[6] Goel, Kanika; Rodriguez Gonzalez, Fernando; Adam, Nico; Duro, Javier; Gaset, Marc. Thermal Dilation Monitoring of Complex Urban Infrastructure Using High Resolution SAR Data. IGARSS 2014 - 2014 IEEE International Geoscience and Remote Sensing Symposium, 13-18 July 2014, Quebec City, Canada. IEEE, 2014, pp. 954-957.

[7] Cleveland, Robert B; Cleveland, William S; Terpenning, Irma. STL: A Seasonal-Trend Decomposition Procedure Based on Loess, Journal of Official Statistics, Vol. 6, Fasc. 1, March 1990: 3.

[8] Andrea Nettis, Vincenzo Massimi, Raffaele Nutricato, Davide Oscar Nitti, Sergio Samarelli, Giuseppina Uva. Satellite-based interferometry for monitoring structural deformations of bridge portfolios, Automation in Construction, Vol. 147, March 2023, 104707.

**Claims**

1. Satellite monitoring method (1000) for detecting a structural anomaly of a simply supported bridge, starting from a first plurality of permanent scatterers ($PS_1$) obtained by means of MTInSAR algorithms run on a first satellite radar images time series ($I_A$), as well as from a second plurality of permanent scatterers ($PS_2$) obtained by means of MTInSAR algorithms run on a second satellite radar images time series ($I_D$), wherein:

   - the first satellite radar image time series ($I_A$) is related to a first ascending orbital geometry of a satellite and the second satellite radar image time series ($I_D$) is related to a second descending orbital geometry of the satellite opposite to the first ascending orbital geometry along an axis of a satellite reference system;
   - each permanent scatterer of the first plurality of permanent scatterers ($PS_1$) is **characterized by** a first satellite data time series ($D_{SAT1}$); and
   - each permanent scatterer of the second plurality of permanent scatterers ($PS_2$) is **characterized by** a second satellite data time series ($D_{SAT2}$),
   the first ($D_{SAT1}$) and the second ($D_{SAT2}$) satellite data time series each comprising a respective latitude, a respective longitude, a respective height above sea level, a respective coherence, a respective speed, and a respective bridge displacement time series ($d_{LoS}$),
   wherein:

   - the respective bridge displacement time series ($d_{LoS}$) of the first satellite data time series ($D_{SAT1}$) has a first time baseline comprising a first initial time instant $t_0^{SAT1}$ and a first series of N time instants $t_1^{SAT1}, t_2^{SAT1}, ..., t_N^{SAT1}$ subsequent to the first initial instant $t_0^{SAT1}$; and
   - the respective bridge displacement time series ($d_{LoS}$) of the second satellite data time series ($D_{SAT2}$) has a second time baseline comprising a second initial time instant $t_0^{SAT2}$ and a second series of M time instants $t_1^{SAT2}, t_2^{SAT2}, ..., t_M^{SAT2}$ subsequent to the second initial instant $t_0^{SAT2}$,

the method comprising carrying out the following steps:

A. selecting (100) a common subset of bridge permanent scatterers ($PS_P$) from the first plurality of permanent scatterers ($PS_1$) and the second plurality of permanent scatterers ($PS_2$), so that the common subset of bridge permanent scatterers ($PS_P$) comprises only bridge-related permanent scatterers;

B. if the first initial instant $t_0^{SAT1}$ does not coincide with the second initial instant $t_0^{SAT2}$, carrying out one of the following sub-steps:

B-1. if the first initial time instant $t_0^{SAT1}$ is subsequent to the second initial time instant $t_0^{SAT2}$, eliminating (200) from the respective bridge displacement time series ($d_{LoS}$) of the second satellite data time series ($D_{SAT2}$) all the values between the second initial time instant $t_0^{SAT2}$ and the first initial time instant $t_0^{SAT1}$; or

B-2. if the second initial time instant $t_0^{SAT2}$ is subsequent to the first initial time instant $t_0^{SAT1}$, eliminating (250) from the respective bridge displacement time series ($d_{LoS}$) of the first satellite data time series ($D_{SAT1}$) all the values between the first initial time instant $t_0^{SAT1}$ and the second initial time instant $t_0^{SAT2}$;

C. if $M \neq N$ and each second subsequent time instant of the first series of N time instants $t_1^{SAT1}, t_2^{SAT1}, ..., t_N^{SAT1}$ does not correspond temporally to the respective each first subsequent time instant of the second series of M subsequent time instants $t_1^{SAT2}, t_2^{SAT2}, ..., t_M^{SAT2}$, linearly interpolating (300) the respective bridge displacement time series ($d_{LoS}$) of the first satellite data time series ($D_{SAT1}$) and/or the respective bridge displacement time series ($d_{LoS}$) of the second satellite data time series ($D_{SAT2}$) so that both have a single time baseline comprising a single series of K subsequent time instants $t_1', t_2', ..., t_K'$, where $K > M$ and $K > N$;

D. defining (400) a local mobile reference system (M-LCRS) of the bridge, having a first axis (L) oriented along a longitudinal direction of the bridge, a second axis (T) oriented along a transverse direction of the bridge, and a third axis (V) perpendicular to the first (L) and second (T) axes;

E. projecting (500), into an ENU reference system, the respective bridge displacement time series ($d_{LoS}$) of the first ($D_{SAT1}$) and second ($D_{SAT2}$) satellite data time series and for each permanent scatterer of the common subset of bridge permanent scatterers ($PS_P$), obtaining a respective ENU bridge displacement time series ($d_{ENU}$) having a respective East component ($d_{ENU-E}$) along an East axis (E) of the ENU reference system, a respective North component ($d_{ENU-N}$) along a North axis (N) of the ENU reference system, and a respective vertical component ($d_{ENU-U}$) along a vertical axis (U) of the ENU reference system, perpendicular to the East axis (E) and to the North axis (N), wherein:

- the respective North component ($d_{ENU-N}$) is considered negligible;
- the respective East component ($d_{ENU-E}$) of the first satellite data time series ($D_{SAT1}$) is equal to the respective East component ($d_{ENU-E}$) of the second satellite data time series ($D_{SAT2}$); and
- the respective vertical component ($d_{ENU-U}$) of the first satellite data time series ($D_{SAT1}$) is equal to the respective vertical component ($d_{ENU-U}$) of the second satellite data time series ($D_{SAT2}$);

F. projecting (600), in the mobile reference system M-LCRS of the bridge, the respective ENU bridge displacement time series ($d_{ENU}$) and for each permanent scatterer of the common subset of bridge permanent scatterers ($PS_P$), obtaining a M-LCRS bridge displacement time series ($d_{M-LCRS}$) having a longitudinal component ($d_{M-LCRS-L}$) along the first axis (L) of the local mobile reference system (M-LCRS) of the bridge, a transverse component ($d_{M-LCRS-T}$) along the second axis (T) of the local mobile reference system (M-LCRS) of the bridge, and a vertical component ($d_{M-LCRS-V}$) along the third axis (V) of the local mobile reference system (M-LCRS) of the bridge, wherein the transverse component ($d_{M-LCRS-T}$) is considered negligible;

G. performing a spatial averaging (710) of the longitudinal component ($d_{M-LCRS-L}$) of the projected bridge displacement time series ($d_{M-LCRS}$), as well as a spatial averaging (720) of the vertical component ($d_{M-LCRS-T}$) of the projected bridge displacement time series ($d_{M-LCRS}$), said spatial averagings being performed with respect to the permanent scatterers of the common subset of bridge permanent scatterers ($PS_P$), in order to obtain a longitudinal component ($\overline{d_L}$) of an averaged bridge displacement time series ($\overline{d}$) and a vertical component ($\overline{d_V}$) of an averaged bridge displacement time series (d), respectively;

H. processing (800) the longitudinal component ($\overline{d_L}$) of the averaged bridge displacement time series (d) and the vertical component ($\overline{d_V}$) of the averaged bridge displacement time series (d) according to a trend-seasonal decomposition STL-LOESS method, in order to extract a longitudinal trend component ($T_{r-L}$) along the first axis (L) and a vertical trend component ($T_{r-V}$) along the third axis (V), as well as a longitudinal seasonal component ($S_{eas-L}$) along the first axis (L) and a vertical seasonal component ($S_{eas-V}$) along the third axis (V);

I. comparing (910) the longitudinal seasonal component ($S_{eas-L}$) with a predefined longitudinal attention range defined between a minimum longitudinal attention threshold $d_{Term-min}$ and a maximum longitudinal attention threshold $d_{Term-max}$, and comparing (920) the vertical trend component ($T_{r-V}$) with a maximum vertical attention threshold,

the structural anomaly of the bridge being detected if the longitudinal seasonal component ($S_{eas-L}$) is outside the predefined longitudinal attention range, or if the vertical trend component ($T_{r-V}$) exceeds the predefined vertical attention threshold.

2. Method according to claim 1, wherein in step A the common subset of bridge permanent scatterers ($PS_P$) is obtained by carrying out the following sub-steps:

A-1. excluding all the permanent scatterers of the first ($PS_1$) and second ($PS_2$) pluralities of permanent scatterers having the respective longitude not within a predefined range with respect to a longitude of a bridge centerline, or the respective latitude not within a predefined range with respect to a latitude of the bridge centerline;

A-2. from the permanent scatterers remaining after sub-step A-1, excluding all the permanent scatterers having the height above sea level not within a predefined range with respect to a height above sea level of a bridge centroid; and

A-3. from the permanent scatterers remaining after sub-step A-2, excluding all the permanent scatterers having the respective coherence below a predefined coherence value, as well as the respective speed within a predefined range with respect to a predefined speed value.

3. Method according to claim 2, wherein in sub-step A-1, the predefined range with respect to the longitude of the bridge centerline and the predefined range with respect to the latitude of the bridge centerline are selected by defining an area of the bridge footprint as an increase of the bridge centerline along the first (L) and the second (T) axes by an amount equal to a spatial resolution of the first satellite radar image time series ($I_A$) and of the second satellite radar images time series ($I_D$).

4. Method according to claim 2 or 3, wherein before sub-step A-2 and after sub-step A-1, the following further sub-steps are carried out:

A-1-1. rigidly translating each permanent scatterer of the permanent scatterers remaining after sub-step A-1 by an amount equal to a difference between the respective mean height above sea level and a height above sea level of the bridge centroid, in order to obtain a respective correct height above sea level for each of said permanent scatterers; and

A-1-2. from the permanent scatterers remaining after sub-step A-1, excluding all the permanent scatterers having the correct height above sea level not within a predefined range with respect to the height above sea level of the bridge centroid.

5. Method according to any one of claims 2 to 4, wherein sub-step A-3 comprises excluding all permanent scatterers having the respective speed belonging to 5% and 95% order fractiles of a normal distribution of the respective speeds of the permanent scatterers which remain after sub-step **A-2.**

6. Method according to any one of the preceding claims, wherein:

- the first ($D_{SAT1}$) and the second ($D_{SAT2}$) satellite data time series each further comprise a respective Azimuth angle $\alpha$ and a respective incidence angle $\theta$; and

- in step E, the respective ENU bridge displacement time series ($d_{ENU}$) is obtained by solving, for both the first ($D_{SAT1}$) and the second ($D_{SAT2}$) satellite data time series, the following equation:

$$d_{LoS} = d_E \sin\theta\cos\alpha - d_N \sin\theta\sin\alpha + d_U \cos\theta;$$

and
- in step F, the M-LCRS bridge displacement time series ($d_{M\text{-}LCRS}$) is obtained by solving the following equation:

$$[d_E; d_N; d_U]^T = R_V R_T R_L [d'_L; d'_T; d_{,V}]^T$$

wherein:

$$R_V = \begin{bmatrix} \cos\gamma & \sin\gamma & 0 \\ -\sin\gamma & \cos\gamma & 0 \\ 0 & 0 & 1 \end{bmatrix}, R_T = \begin{bmatrix} \cos\beta & 0 & \sin\beta \\ 0 & 1 & 0 \\ -\sin\beta & 0 & \cos\beta \end{bmatrix}, R_L$$

$$= \begin{bmatrix} 1 & 0 & 0 \\ 0 & \cos\delta & \sin\delta \\ 0 & -\sin\delta & \cos\delta \end{bmatrix}$$

and wherein $\gamma$ is an angle between the East axis (E) and the first axis (L) when the vertical axis (U) coincides with the third axis (V), $\beta$ is an angle between the vertical axis (U) and the third axis (V) when the North axis (N) coincides with the second axis (T), and $\delta$ is an angle between the vertical axis (U) and the third axis (V) when the first axis (L) coincides with the East axis (E).

7. Method according to any one of the preceding claims, wherein after step G and before step H, the following sub-step is carried out:
G-1. linearly interpolating the averaged bridge displacement time series ($\overline{d}$) so that the single series of K subsequent time instants $t'_1, t'_2, \dots, t'_K$ is **characterized by** a predefined time frequency.

8. Method according to any one of the preceding claims, wherein the bridge is divided into a plurality of bridge portions, each bridge portion being associated with a respective bridge portion centroid, steps A-I of the method being carried out for each bridge portion of the plurality of bridge portions.

9. Method according to claim 8, wherein before sub-step I, the following further sub-steps are carried out:

H-1. providing an average daily temperature time series Temp of an area close to the bridge having a third time baseline comprising:

- a third initial time instant $t_0^{Temp}$ equal to the first initial time instant $t_0^{SAT1}$ if sub-step B-1 has been carried out, or equal to the second initial time instant $t_0^{SAT2}$ if sub-step B-2 has been carried out; and

- a third series of K time instants $t_1^{Temp}, t_2^{Temp}, \dots, t_K^{Temp}$ subsequent to the third initial time instant

$t_0^{Temp}$ equal to the single series of K subsequent time instants $t'_1, t'_2, \dots, t'_K$;

H-2. with respect to an initial temperature $T_0$ relating to the third initial time instant $t_0^{Temp}$, calculating a first temperature difference $\Delta T_1$ as the difference between a maximum temperature $T_{MAX}$ of the average daily temperature time series Temp and the predefined initial temperature $T_0$, as well as a second temperature difference $\Delta T_2$ as the difference between a minimum temperature $T_{MIN}$ of the average daily temperature time series Temp and the initial temperature $T_0$,

and wherein, in step I, the minimum longitudinal attention threshold $d_{Term\text{-}min}$ is calculated as $\mathbf{d_{Term\text{-}min}} = \alpha_{CTE} \cdot \Delta T_2 \cdot \mathbf{L_{prog}}$, and the maximum longitudinal attention threshold $d_{Term\text{-}max}$ is calculated as $\mathbf{d_{Term\text{-}max}} = \alpha_{CTE} \cdot \Delta T_1 \cdot \mathbf{L_{prog}}$,

wherein $\alpha_{CTE}$ is a coefficient of thermal expansion of a concrete, $L_{prog}$ is a progressive length of the respective bridge portion centroid from a fixed support end of the bridge.

10. Method according to claim 8 or 9, wherein step I comprises carrying out one of the following sub-steps:

I-1. if the vertical trend component ($T_{r-V}$) is higher in the central bridge portion than in side bridge portions along the longitudinal direction of the bridge, the maximum vertical attention threshold is calculated as $\dfrac{F_{Traffic} \cdot L_{tot}^3}{48 \cdot E_C \cdot J_{deck}}$, wherein $E_C$ is a Young's modulus of a concrete, $J_{deck}$ is a moment of inertia about the transverse direction of the bridge, $L_{tot}$ is a total length of a bridge span, and $F_{Traffic}$ is assumed to be 600 kN; otherwise
I-2. summing the vertical trend component ($T_{r-V}$) in an annual time interval, the structural anomaly of the bridge being detected if said sum exceeds a maximum annual vertical attention threshold.

11. Method according to claim 10, wherein after sub-step I-2, the following sub-steps are carried out:

I-3. defining a plurality of vertical trend component differences ($\Delta_i$) consisting of the differences between the vertical trend components ($T_{r-V}$) of two bridge portions progressively consecutive with respect to the longitudinal direction (L);
I-4. calculating a left vertical component difference $\Delta_{sx}$ as the sum of the values of the plurality of vertical trend component differences ($\Delta_i$) of the bridge portions to the left of the central bridge portion and calculating a right vertical component difference $\Delta_{dx}$ as the sum of the values of the plurality of vertical trend component differences ($\Delta_i$) of the bridge portions to the right of the central bridge portion;
I-5. if the right difference $\Delta_{dx}$ and the left difference $\Delta_{sx}$ have the same algebraic sign, the structural anomaly of the bridge is linked to differential displacement phenomena; otherwise
I-6. calculating an absolute value of a difference between the left difference $\Delta_{sx}$ and the right difference $\Delta_{dx}$; and
I-7. if the absolute value of the difference between the left difference $\Delta_{sx}$ and the right difference $\Delta_{dx}$ is greater than a maximum difference value, the structural anomaly of the bridge is linked to a subsidence phenomenon, otherwise the structural anomaly of the bridge is linked to phenomena of material degradation and/or increase in gravitational loads.

12. Computer program comprising instructions which, when the program is run by a computer, cause the computer to carry out the steps of the method according to any one of the preceding claims.

Fig. 1

Fig. 2

Fig. 3

Fig. 4

$\Delta T > 0$    $\alpha_{CTE}, L_{prog}$

$\Delta T < 0$    $\alpha_{CTE}, L_{prog}$

Fig. 5

$T_{r-V1}$    $T_{r-V2}$    $T_{r-V3}$

$T_{r-V1}$    $T_{r-V2}$    $T_{r-V3}$

$T_{r-V1}$    $T_{r-V2}$    $T_{r-V3}$

$\Delta_1$    $\Delta_2$

$\Delta_1$    $\Delta_2$

$\Delta_1$

$\Delta_1 + \Delta_2$    $\Delta_2$

Fig. 6          Fig. 7          Fig. 8

Fig. 9

Europäisches
Patentamt

European
Patent Office

Office européen
des brevets

## EUROPEAN SEARCH REPORT

**Application Number**

EP 25 15 2657

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NETTIS ANDREA ET AL: "Satellite-based interferometry for monitoring structural deformations of bridge portfolios", AUTOMATION IN CONSTRUCTION , vol. 147 1 March 2023 (2023-03-01), XP093189656, AMSTERDAM, NL ISSN: 0926-5805, DOI: 10.1016/j.autcon.2022.104707 Retrieved from the Internet: URL:https://www.sciencedirect.com/science/article/pii/S0926580522005775 * the whole document * | 1-12 | INV. G01S7/295 E01D22/00 G01B15/06 G01S13/90 |
| A | MIRKO CALÒ ET AL: "Multi source Interferometry Synthetic Aperture Radar for monitoring existing bridges: a case study", CE/PAPERS, JOHN WILEY & SONS, INC, HOBOKEN, USA, vol. 6, no. 5, 25 September 2023 (2023-09-25), pages 787-793, XP072503415, ISSN: 2509-7075, DOI: 10.1002/CEPA.2058 * the whole document * | 1-12 | |

TECHNICAL FIELDS
SEARCHED        (IPC)

G01S
E01D
G01B

-/--

The present search report has been drawn up for all claims

| Place of search | Date of completion of the search | Examiner |
|---|---|---|
| Munich | 26 May 2025 | Rudolf, Hans |

EPO FORM 1503 03.82 (P04C01)

Europäisches
Patentamt

European
Patent Office

Office européen
des brevets

**EUROPEAN SEARCH REPORT**

**Application Number**

EP 25 15 2657

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LAZECKY MILAN ET AL: "Bridge Displacements Monitoring Using Space-Borne X-Band SAR Interferometry", IEEE JOURNAL OF SELECTED TOPICS IN APPLIED EARTH OBSERVATIONS AND REMOTE SENSING, IEEE, USA, vol. 10, no. 1, 1 January 2017 (2017-01-01), pages 205-210, XP011637872, ISSN: 1939-1404, DOI: 10.1109/JSTARS.2016.2587778 [retrieved on 2016-12-21] * the whole document * | 1-12 | |
| A | MA PEIFENG ET AL: "SAR-Transformer-based decomposition and geophysical interpretation of InSAR time-series deformations for the Hong Kong-Zhuhai-Macao Bridge", REMOTE SENSING OF ENVIRONMENT, ELSEVIER, XX, vol. 302, 28 December 2023 (2023-12-28), XP087454832, ISSN: 0034-4257, DOI: 10.1016/J.RSE.2023.113962 [retrieved on 2023-12-28] * the whole document * | 1-12 | TECHNICAL FIELDS SEARCHED (IPC) |

-/--

The present search report has been drawn up for all claims

| Place of search | Date of completion of the search | Examiner |
|---|---|---|
| Munich | 26 May 2025 | Rudolf, Hans |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................
& : member of the same patent family, corresponding
   document

EPO FORM 1503 03.82 (P04C01)

page 2 of 3

Europäisches
Patentamt

European
Patent Office

Office européen
des brevets

## EUROPEAN SEARCH REPORT

**Application Number**

EP 25 15 2657

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | QIN XIAOQIONG ET AL: "Three-Dimensional Deformation Monitoring and Structural Risk Assessment of Bridges by Integrating Observations from Multiple SAR Sensors", IGARSS 2018 - 2018 IEEE INTERNATIONAL GEOSCIENCE AND REMOTE SENSING SYMPOSIUM, IEEE, 22 July 2018 (2018-07-22), pages 1384-1387, XP033437481, DOI: 10.1109/IGARSS.2018.8518313 * the whole document * | 1-12 | |
| A | GE NAN ET AL: "Spaceborne Staring Spotlight SAR Tomography-A First Demonstration With TerraSAR-X", IEEE JOURNAL OF SELECTED TOPICS IN APPLIED EARTH OBSERVATIONS AND REMOTE SENSING, IEEE, USA, vol. 11, no. 10, 1 October 2018 (2018-10-01), pages 3743-3756, XP011692669, ISSN: 1939-1404, DOI: 10.1109/JSTARS.2018.2851752 [retrieved on 2018-10-16] * the whole document * | 1-12 | TECHNICAL FIELDS SEARCHED (IPC) |
| A | GOEL KANIKA ET AL: "Thermal dilation monitoring of complex urban infrastructure using high resolution SAR data", 2014 IEEE GEOSCIENCE AND REMOTE SENSING SYMPOSIUM, IEEE, 13 July 2014 (2014-07-13), pages 954-957, XP032673379, DOI: 10.1109/IGARSS.2014.6946584 * the whole document * | 1-12 | |

The present search report has been drawn up for all claims

| Place of search | Date of completion of the search | Examiner |
|---|---|---|
| Munich | 26 May 2025 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Multi source Interferometry Synthetic Aperture Radar for monitoring existing bridges: a case study. **CALÒ, MIRKO** ; **RUGGIERI, SERGIO** ; **NETTIS, ANDREA** ; **UVA, GIUSEPPINA**. Eurostruct 2023 - Digital Transformation in Sustainability, a cura di Alfred Strauss e Konrad Bergmeister. Ernst & Sohn, A Wiley Brand, 2023, 787-793

- **MILAN LAZECKY** ; **IVANA HLAVACOVA** ; **MATUS BAKON** ; **JOAQUIM J. SOUSA** ; **DANIELE PERISSIN** ; **GLORIA PATRICIO**. Bridge Displacements Monitoring Using Space-Borne X-Band SAR Interferometry. *IEEE Journal of Selected Topics in Applied Earth Observations and Remote Sensing*, 01 January 2017, vol. 10, 205-210

- **MA, PEIFENG** ; **WU, ZHERONG** ; **ZHANG, ZHENG-JIA** ; **AU, FRANCIS T. K**. SAR-Transformer-based decomposition and geophysical interpretation of InSAR time-series deformations for the Hong Kong-Zhuhai-Macao Bridge. *Remote Sensing of Environment*, 2024, vol. 302

- **XIAOQIONG, QIN** ; **DING, XIAOLI** ; **LIAO, MINGSHENG**. Three-Dimensional Deformation Monitoring and Structural Risk Assessment of Bridges by Integrating Observations from Multiple SAR Sensors. *Proceedings of the IGARSS 2018 - 2018 IEEE International Geoscience and Remote Sensing Symposium*, July 2018

- **GE, NAN** ; **RODRIGUEZ GONZALEZ** ; **FERNANDO; WANG** ; **YUANYUAN; SHI** ; **YILEI; ZHU** ; **XIAO XIANG**. Spaceborne Staring Spotlight SAR Tomography-A First Demonstration with TerraSAR-X. *arXiv:1807.06826*, 18 July 2018, 20180718

- Thermal Dilation Monitoring of Complex Urban Infrastructure Using High Resolution SAR Data. **GOEL, KANIKA** ; **RODRIGUEZ GONZALEZ** ; **FERNANDO; ADAM** ; **NICO; DURO** ; **JAVIER; GASET, MARC**. IGARSS 2014 - 2014 IEEE International Geoscience and Remote Sensing Symposium. IEEE, 13 July 2014, 954-957

- **CLEVELAND, ROBERT B** ; **CLEVELAND, WILLIAM S**. Terpenning, Irma. STL: A Seasonal-Trend Decomposition Procedure Based on Loess. *Journal of Official Statistics*, March 1995, vol. 6, 3

- **ANDREA NETTIS** ; **VINCENZO MASSIMI** ; **RAFFAELE NUTRICATO** ; **DAVIDE OSCAR NITTI** ; **SERGIO SAMARELLI** ; **GIUSEPPINA UVA**. Satellite-based interferometry for monitoring structural deformations of bridge portfolios. *Automation in Construction*, March 2023, vol. 147, 104707